# DEMANDE DE BREVET EUROPEEN

(11) **EP 1 486 464 A1**
(43) Date de publication de la demande: **15.12.2004**
(21) Numéro de dépôt: 04291447.3
(22) Date de dépôt: 10.06.2004
(51) Int. Cl.: C02F 1/50

(54) **Procédé de désinfection d'une installation d'eau**

(30) Priorité: 12.06.2003 FR 0307048
(71) Demandeur: Promaiga Société Anonyme, 77820 Le Châtelet en Brie (FR)
(72) Inventeur: Castellan, Jean-Pierre Henri, 77620 Egrevilles (FR)
(74) Mandataire: Vander-Heym, Serge

(57) **Abrégé**

Procédé de désinfection d'une installation d'eau fonctionnant en boucle, consistant à mesurer en continu la valeur du taux du produit désinfectant contenu dans la boucle, à comparer cette valeur à une valeur prédéterminée et à injecter du produit désinfectant dans la boucle tant que le taux mesuré reste en dessous de ladite valeur prédéterminée.

Moyen de mise en oeuvre du procédé, caractérisé en ce qu'on effectue un piquage sur la canalisation de retour pour alimenter une chambre (8), à écoulement libre, comportant une électrode (9) qui transmet l'information à un appareil de mesure (10) qui compare la valeur de la mesure à une valeur prédéterminée et commande l'actionnement d'une pompe d'injection (1 1 ) si cette valeur est inférieure à celle prédéterminée.

## Description

La présente invention est relative à un procédé de désinfection d'une installation d'eau et plus particulièrement d'une installation sanitaire d'eau chaude.

La présente invention vise, aussi, des moyens permettant de mettre en oeuvre le procédé de l'invention.

En l'état actuel de la technique deux procédés sont utilisés pour désinfecter une installation, le premier consiste à effectuer une désinfection de choc et l'autre à effectuer une désinfection continue.

Dans le premier cas, on introduit dans le circuit un produit désinfectant surdosé ce qui implique d'arrêter, pendant un certain temps, la distribution d'eau avec tous les inconvénients que cela implique pour les usagers. A cela s'ajoute le fait que, pour rincer l'installation, il faut ouvrir tous les robinets et disposer donc, à cet effet, du personnel nécessaire.

Dans le second cas, on admet en continu une certaine quantité de désinfectant qui est proportionnelle à la quantité d'eau consommée, le dosage devant être suffisamment important pour être sûr de l'efficacité (de l'ordre de 2 à 3 ppm de chlore libre par exemple).

L'expérience a montré que le taux de produit chloré, qui est néanmoins important, provoquait des désagréments pour les usagers et une corrosion des canalisations.

Mais le plus grave défaut de ce procédé réside dans le fait que, si la pollution est importante, rien ne permet de le savoir et par conséquent d'y remédier.

Le procédé de l'invention, qui remédie à ces inconvénients, consiste à mesurer, en permanence, le taux de produit désinfectant, à injecter dans le circuit du produit s'il est constaté que la valeur du taux est en dessous d'une valeur prédéterminée et à poursuivre cette injection tant que la valeur du taux mesuré n'aura pas atteint, à nouveau, celle prédéterminée.

Le procédé de l'invention met en oeuvre une constatation scientifique selon laquelle les bactéries qui se développent dans les canalisations sont détruites par le produit chloré et que, simultanément, le taux de concentration du produit baisse. Dès lors, il en résulte qu'une chute du taux de concentration du produit de traitement est le signe qu'une infection est en train de se développer.

Le procédé de l'invention permet d'intervenir dès le début de l'infection pour la stopper et empêcher qu'elle se développe.

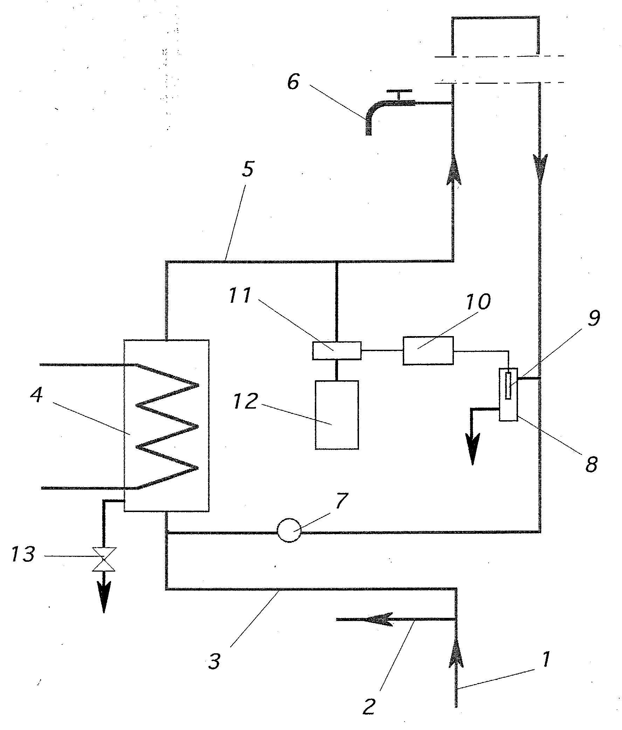

La présente invention sera mieux comprise par la description qui va suivre faite en se référant au dessin dont la figure unique montre, schématiquement, une installation modifiée pour permettre la mise en oeuvre du procédé de l'invention.

Dans sa forme la plus simple, une installation de distribution d'eau sanitaire comporte une canalisation d'arrivée 1 et deux canalisations de départ 2 et 3, dont l'une est destinée à l'eau froide et l'autre à l'eau chaude.

La canalisation 3 alimente en eau froide une chaudière 4 d'où l'eau, à bonne température, ressort par une canalisation 5 alimentant des robinets de soutirage tel que celui 6.

La canalisation 5 est bouclée et l'eau non utilisée retourne à la chaudière par l'entremise d'une pompe de circulation 7.

Dans ce circuit, qui comporte des parties dans lesquelles l'eau stagne, des bactéries se développent qu'il convient d'éliminer en introduisant dans celui-ci un produit désinfectant, chloré de préférence.

On sait par expérience que, si la concentration du produit désinfectant diminue, cela signifie que des bactéries se sont développées.

Le procédé de l'invention consiste à mesurer en continu le taux de concentration de produit désinfectant et à injecter, dans le circuit, du produit dès que la valeur de ce taux descend en dessous d'une valeur prédéterminée et tant que celui-ci reste en dessous de cette valeur.

Tant que la valeur du taux de concentration reste stable, on est sûr qu'aucune contamination ne se développe et l'on peut agir aussitôt pour l'arrêter et éviter ainsi qu'elle ne devienne incontrôlable.

A cela s'ajoute le fait que la valeur de ce taux peut être très basse ce qui constitue un avantage très appréciable pour les usagers et évite les phénomènes de corrosion des canalisations.

Un moyen de mise en oeuvre du procédé de l'invention consiste à effectuer un piquage sur la canalisation de retour pour effectuer un prélèvement dans une chambre 8, à écoulement libre, comportant une électrode de mesure 9 qui transmet l'information à un appareil de mesure 10, qui compare la valeur du taux mesuré à celle souhaitée. Si cette valeur tombe en dessous d'une valeur prédéterminée, un signal est transmis à une pompe 1 1 qui injecte du produit désinfectant dans le circuit à partir d'un réservoir 12. La pompe 1 1 peut fonctionner en continu ou par impulsions d'une durée de temps judicieusement déterminée.

Le prélèvement d'eau est juste suffisant pour permettre une mesure mais est négligeable par rapport au débit possible de l'installation.

De préférence, et comme cela ressort du dessin, le produit désinfectant est injecté à la sortie de la chaudière.

Si le dispositif de l'invention est actionné, cela signifie qu'une contamination se développe parce que de l'eau stagne dans les canalisations donc que les robinets de soutirage ne sont pas utilisés suffisamment.

Selon une autre caractéristique de l'invention, l'actionnement de la pompe d'injection 11 commande l'ouverture d'une électrovanne 13 de vidange. De cette façon, en éliminant une certaine partie de l'eau polluée, il est possible de rétablir plus rapidement la situation et d'économiser du produit désinfectant.

Par mesure de précaution, le fonctionnement de la pompe d'injection peut être placé sous la dépendance d'une minuterie susceptible de déclencher une alerte si la pompe 11 fonctionne au-delà d'un temps prédéterminé signe qu'une grave contamination est en cours et qu'il faut stopper la distribution d'eau.

## Revendications

1. Procédé de désinfection d'une installation d'eau fonctionnant en boucle et consistant à mesurer en continu la valeur du taux du produit désinfectant contenu dans la boucle, à comparer cette valeur à une valeur prédéterminée et à injecter du produit désinfectant dans la boucle tant que le taux mesuré reste en dessous de ladite valeur prédéterminée, **caractérisé en ce qu'**on effectue un piquage sur la canalisation de retour pour alimenter une chambre (8), à écoulement libre, comportant une électrode (9) qui transmet l'information à un appareil de mesure (10) qui compare la valeur de la mesure à une valeur prédéterminée et commande l'actionnement d'une pompe d'injection (11) si cette valeur est inférieure à celle prédéterminée.

2. Procédé selon la revendication 1, consistant à commander l'ouverture d'une électrovanne de vidange dès que la valeur du taux mesuré tombe en dessous de la valeur prédéterminée.

3. Procédé selon l'une des revendications 1 et 2, **caractérisé en ce que** la pompe d'injection est placée sous la dépendance d'une minuterie susceptible de déclencher une alerte si le fonctionnement de ladite pompe dépasse un temps prédéterminé.
